# EUROPÄISCHE PATENTSCHRIFT

(11) **EP 4 200 346 B1**
(45) Veröffentlichungstag und Bekanntmachung des Hinweises auf die Patenterteilung: **31.07.2024**
(21) Anmeldenummer: 21763301.5
(22) Anmeldetag: 13.08.2021
(51) Int. Cl.: C08G 18/09, C08G 18/22, C08G 18/42, C08G 18/68, C08G 18/76, C08G 63/48, C08J 9/14

(54) **LAGERSTABILE POLYOLFORMULIERUNGEN**
POLYOL FORMULATIONS WHICH ARE STABLE IN STORAGE
FORMULATIONS POLYOL STABLES AU STOCKAGE

(30) Priorität: 20.08.2020 EP 20191870
(43) Veröffentlichungstag der Anmeldung: 28.06.2023
(73) Patentinhaber: Covestro Deutschland AG, 51373 Leverkusen (DE)
(72) Erfinder: MARBACH, Jakob, 51371 Leverkusen (DE); ALBACH, Rolf, 51061 Köln (DE); NEFZGER, Hartmut, 50259 Pulheim (DE); WELSCH, Nicole, 51503 Rösrath (DE); BANH, Hung, 51371 Leverkusen (DE); SCHLEIERMACHER, Stephan, 50259 Pulheim (DE)
(74) Vertreter: Levpat
(86) Internationale Anmeldenummer: PCT/EP2021/072574
(87) Internationale Veröffentlichungsnummer: WO 2022/038050

(56) Entgegenhaltungen:
- WO-A2-2010/043624

## Beschreibung

Die vorliegende Erfindung betrifft Polyesterpolyole aus Terephthalsäure(derivaten) und deren Herstellung sowie Formulierungen enthaltend diese Polyesterpolyole. Die Erfindung betrifft weiterhin die Verwendung dieser Polyester-Polyole zur Herstellung von Polyurethan/Polyisocyanurat-Hartschaumstoffen (im Folgenden auch PUR/PIR-Hartschaumstoffe genannt), wie sie in wachsendem Masse zum Beispiel zur thermischen Isolierung von Gebäuden, Klimaschächten oder Fernwärmeleitungen eingesetzt werden. Sie tragen somit zur Verringerung der Emission von klimawirksamen Gasen durch Heizung und Kühlung unter Verwendung fossiler Energieträger bei.

PUR/PIR-Hartschaumstoffe werden typischerweise durch Umsetzung einer Polyol- mit einer Isocyanatkomponente in Gegenwart eines Treibmittels hergestellt. Weiterhin können Additive wie Schaumstabilisatoren und Flammschutzmittel zugesetzt werden.

Polyester-Polyole sind ein wichtiger Bestandteil vieler geschäumter und nicht geschäumter Polyurethansysteme. Derartige Polyester-Polyole werden häufig durch Kondensation von aromatischen und/oder aliphatischen Dicarbonsäuren und Alkandiolen und/oder -triolen sowie Etherdiolen gebildet. Bei der Verwendung von aromatischen Dicarbonsäuren ist beispielsweise aus WO 2010/043624 bekannt, dass Terephthalsäure-basierte Polyester bezüglich Ihres Brandverhaltens Phthalsäure-basierten Polyestern überlegen sind. Es ist ebenfalls bekannt, dass zur Herstellung von Polyester-Polyolen Polyalkylenterephthalate (PAT), insbesondere Poly(ethylenterephthalat) (PET) und Poly(butylenterephthalat) (PBT) - Recyclate eingesetzt werden können. Die Verwendung von Polyalkylenterephthalaten führt jedoch häufig zu Produkten, deren Viskosität hoch ist und / oder die während ihrer Lagerung kristallisieren oder sedimentieren. Wünschenswert sind daher Produkte, die bei Raumtemperatur klar und flüssig sind und während ihrer Lagerung kein Sediment bilden. Ein weiteres Problem bei PAT-basierten Polyester-Polyolen ist das Ausflocken bei der Mischung mit anderen Formulierungsbestandteilen, insbesondere in Gegenwart von Wasser.

Um dieses Problem zu lösen, offenbart EP 0974611 die Herstellung von klaren Polyesterpolyolen, bestehend aus einem Umsetzungsprodukt von PAT, einem aliphatischen Dicarbonsäuregemisch, sowie eines zyklischen Alkandiol-Esters. Nachteilig ist hierbei die eingeschränkte Verfügbarkeit sowohl des Dicarbonsäuregemisches als auch des Ringester-Additivs. Zudem werden keinerlei Eigenschaften von PUR/PIR-Hartschaumstoffen unter Verwendung des klaren Polyester-Polyols beschrieben.

EP 3283545 offenbart die Herstellung von klaren Polyester-Polyolen basierend auf PET durch den Zusatz von mehr als 10 Gew.% eines "Clarifiers (Bisphenol A-Analoge/Derivate)", sowie die relativ hohen OH-Zahlen der offenbarten Polyester-Polyole. Die Anwendung in PUR/PIR-Hartschaumstoffen ist nicht beschrieben.

US 4559370 zeigt, dass klare Polyesterpolyole erhalten werden können, wenn 50% des über PAT eingetragenen Ethylenglykols destillativ entfernt werden. Dies wird bestätigt durch JP 2000191756 und EP 1178062, die das so verlorene Ethylenglykol durch Alkoxylierung, beispielsweise mit Ethylenoxid, verlängern und als verlängertes Diol wieder in die Reaktion zurückführen. Dieses Verfahren vermeidet den Nachteil des Materialverlustes durch eine aufwendige Anlage.

Aufgabe der vorliegenden Erfindung war es daher, ein einfaches Verfahren bereitzustellen für die Herstellung von Polyester-Polyolen basierend auf PAT, bei dem ohne die Zugabe von Additiven klare, lagerstabile Polyester-Polyole erhalten werden. Als lagerstabil wird in diesem Zusammenhang das Ausbleiben einer Trübung oder Sedimentation über einen Zeitraum von mehr als drei Monaten sowohl der reinen Polyester-Polyole als auch einer Polyolformulierung enthaltend Polyester-Polyole auf Basis von PAT bezeichnet.

Eine weitere Aufgabe der vorliegenden Erfindung war es, Polyester-Polyole enthaltend Terephthalsäure-Baueinheiten mit vorteilhafter Viskosität für die Verarbeitung unter Hochdruckvermischung bereitzustellen (Viskosität bei 25 °C ≤ 8 Pa*s, bevorzugt < 5 Pa*s).

Eine weitere Aufgabe der vorliegenden Erfindung war es Polyester-Polyole enthaltend Terephthalsäure-Baueinheiten, insbesondere basierend auf Polyalkylenterephthalaten, für die Herstellung von PUR/PIR-Hartschaumstoffen mit guter Dimensionsstabilität, geringer Sprödigkeit und guten Brandeigenschaften herzustellen.

Diese Aufgaben konnten überraschenderweise dadurch gelöst werden, dass bei der Herstellung der Polyester-Polyole (PAT-PES) ein Carbonsäuregemisch aus mindestens vier verschiedenen Carbonsäuren bzw. Carbonsäurederivaten (im weiteren auch zusammen mit "Carboxy-funktionelle Verbindungen" bezeichnet) eingesetzt wird, welches neben der Terephthalsäure bzw. dem Terephthalsäurederivat, insbesondere PAT, zusätzlich mindestens eine weitere aromatische Dicarbonsäure bzw. Dicarbonsäurederivat, mindestens eine aliphatische Dicarbonsäure bzw. Dicarbonsäurederivat, sowie eine Monocarbonsäure bzw. Monocarbonsäurederivat sowie ein Gemisch aus bestimmten Alkoholen enthält.

Gegenstand der Erfindung sind Polyesterpolyole PAT-PES, welche aufgebaut sind aus Baueinheiten cs, die von Säurekomponenten abgeleitet sind, und Baueinheiten ak, welche von alkoholischen Komponenten abgeleitet sind,
wobei cs aus

| | | | |
|---|---|---|---|
| cs1 | 40-60 | Mol.-% bezogen auf cs, | bevorzugt 45-55 Mol.%, Baueinheiten abgeleitet von Terephthalsäure, |
| cs2 | 8-28 | Mol.-% bezogen auf cs, | bevorzugt 10-20 Mol.-%, Baueinheiten abgeleitet von mindestens einer weiteren von CS1 verschiedenen aromatischen Dicarbonsäure, |
| cs3 | 15-35 | Mol.-% bezogen auf cs, | bevorzugt 25-35 Mol.-%, Baueinheiten abgeleitet von mindestens einer aliphatischen Dicarbonsäure |
| cs4 | 4-14 | Mol.-% bezogen auf cs, | Baueinheiten abgeleitet von mindestens einer Monocarbonsäure mit einem Molgewicht ≥100 g/mol, und |
| cs5 | 0-33 | Mol.-% bezogen auf cs, | Baueinheiten abgeleitet von weiteren Carbonsäuren, |

besteht, und wobei ak aus

| | | | |
|---|---|---|---|
| ak1 | 25-40 | Mol.-% bezogen auf ak, | bevorzugt 25-38 Mol.-% Baueinheiten abgeleitet von ein oder mehreren Diolen mit einem Molgewicht <100 g/mol, |
| ak2 | 60-75 | Mol.-% bezogen auf ak, | Baueinheiten abgeleitet von ein oder mehreren Diolen mit einem Molgewicht von 100-190 g/mol, bevorzugt sind >80 mol-% der OH-Funktionen primäre aliphatische OH-Funktionen, |
| ak3 | 0-3 | Mol.-% bezogen auf ak, | Baueinheiten abgeleitet von ein oder mehreren Diolen mit einem Molgewicht >190 g/mol, bevorzugt 191 - 800 g/mol, |
| ak4 | 0-3 | Mol.-% bezogen auf ak, | Baueinheiten abgeleitet von ein oder mehreren Polyolen mit einer Funktionalität ≥3 und mit einem Molgewicht 90-190 g/mol (keine Polyether), |
| ak5 | 0-15 | Mol.-% bezogen auf ak, | Baueinheiten abgeleitet von ein oder mehreren Monoolen, z. B. nichtionische Tensiden, |

besteht.

Die Polyesterpolyole weisen eine Viskosität von ≤ 8 Pa*s (25°C), insbesondere 1 - 8 Pa*s (25°C), besonders bevorzugt 1 - 7 Pa*s (25°C) und ganz besonders bevorzugt von 1 - 5 Pa*s (25°C) auf.

In einer Ausführungsform weist das Polyesterpolyol PAT-PES Hydroxylzahlen von 150 bis 350 mg KOH/g auf, bevorzugt von 160 bis 260 mg KOH/g, besonders bevorzugt von 165 bis 260 mg KOH/g auf, eine Säurezahl von 0,5-5 mg KOH/g, insbesondere bevorzugt 1,5 - 2,5 mg KOH/g, auf.

Das Polyesterpolyol kann ferner eine OH-Funktionalität von 1,8 bis 3 besitzen, bevorzugt 1,9 bis 2,5, insbesondere bevorzugt von 1,9 - 2,1.

Zur Herstellung der Baueinheiten cs in PAT-PES, die von Säurekomponenten abgeleitet sind, werden als Edukt ein Gemisch aus Säuren und/oder Säurederivaten (CS) eingesetzt.

Um die Baueinheiten cs 1 zu erhalten, werden ein oder mehrere Carboxy-funktionellen Verbindungen (CS1) ausgewählt aus der Gruppe bestehend aus Terephthalsäure und Derivaten der Terephthalsäure für die Herstellung von PAT-PES verwendet. Unter "Derivaten der Terephthalsäure" sind Reaktionsprodukte der Terephthalsäure mit Reaktionspartnern zu verstehen, aus denen sich bei geeigneten Reaktionsbedingungen die Terephthalsäure wieder freisetzen lässt. In einer bevorzugten Ausführungsform werden Polyester der Terephthalsäure mit aliphatischen und / oder aromatischen Kondensationspartnern eingesetzt. Besonders bevorzugt werden Polyalkylenterephthalate bzw. Terephthalat-Mischungen enthaltend überwiegend Polyalkylenterephthalate, eingesetzt, wobei es sich bei dem Polyalkylenterephthalat insbesondere bevorzugt um Polyethylenterephthalat handelt. Aber auch mit Cyclohexandimethanol modifiziertes Poly(ethylen)terephthalat, aromatisch-aliphatische Copolyester (z.B. erhältlich unter dem Markennamen Ecoflex), Polytrimethylenterephthalat, Polybutylenterephthalat und Terephthalsäure-basierte Nebenprodukte aus der Herstellung der genannten Polyester können geeignet sein. In einer Ausführungsform können die genannten Polymere auch mit anderen Polykondensationspolymeren wie Polyamiden (z.B. Polyamid 6, Polyamid 66, MXD6 und anderen) als Compounds, als physikalische Mischung und/oder als Laminate vorliegen. Die Terephthalate können auch mit anderen Polymeren wie Polyolefinen oder PVC oder anderen Materialien wie Papier, Metallfolien oder Staub verunreinigt sein, die im Endprodukt als Nebenprodukte vorliegen und dort verbleiben oder durch Abtrennung entfernt werden.

Um die Baueinheiten cs2 zu erhalten, werden ein oder mehreren Verbindungen aus der Gruppe bestehend aus difunktionellen aromatischen Säuren und difunktionellen aromatischen Carbonsäurederivaten unterschiedlich von der Komponente CS1 eingesetzt (CS2), z.B. Carbonsäurechloride, Carbonsäureanhydride und Carbonsäurealkylester. Insbesondere werden die freien Säuren oder deren Anhydride eingesetzt. Bevorzugt sind Verbindungen, die von Phthalsäure, Isophthalsäure, Naphthalindicarbonsäure, Furandicarbonsäure, oder Kombinationen von diesen Säuren abgeleitet sind, insbesondere von Phthalsäure. Auch Tricarbonsäuren wie Trimellithsäure und ihre Derivate sind als Comonomere möglich. Die unter CS2 fallenden Polyethylennaphthalate, Isophthalate oder Polyethylenfuranoate können auch in den eingesetzten Polyalkylenterephthalaten CS1 als Nebenprodukte enthalten sein.

Um die Baueinheiten cs3 zu erhalten, werden ein oder mehrere Carboxy-difunktionelle Verbindungen (CS3) ausgewählt aus einer oder mehreren Verbindungen aus der Gruppe bestehend aus difunktionellen aliphatischen Carbonsäuren und difunktionellen aliphatischen Carbonsäurederivaten, z.B. Carbonsäurechloriden, Carbonsäureanhydriden, Carbonsäureamiden und Carbonsäurealkylestern, eingesetzt. Insbesondere werden die freien Säuren oder deren Anhydride eingesetzt. Bevorzugt sind Verbindungen, die von Adipinsäure, Glutarsäure, Bernsteinsäure, Pimelinsäure, Korksäure, Azelainsäure, Decandicarbonsäure, Maleinsäure, Fumarsäure, Malonsäure, Sebacinsäure und Mischungen einer oder mehrerer dieser Säuren abgeleitet sind, insbesondere von Adipinsäure. Auch Nebenprodukte aus der Herstellung dieser Säuren können geeignet sein. Die Adipinsäure kann auch in Form von Polyamid 66, z. B. als Compound mit Komponente CS1, eingetragen werden.

Um die Baueinheiten cs4 zu erhalten, werden ein oder mehrere Verbindungen (CS4) ausgewählt aus einer oder mehreren Verbindungen aus der Gruppe bestehend aus Fettsäuren und Fettsäurederivaten, z.B. Triglyceriden wie Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl (Sojaöl), Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Tallöl und seine Komponenten, Fettsäurechloriden und Fettsäurealkylestern, Hydroxymodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure, insbesondere Ölsäure. Die Monocarbonsäure-Komponente kann aber auch ein Derivat der Benzoesäure, eine Hydroxycarbonsäure wie ein geöffnetes Lacton bzw. eine Hydroxybenzoesäure oder eine Aminocarbonsäure sein, wie sie bei der Ringöffnung von Lactamen bzw. bei der Hydrolyse von Polyamid 6 entstehen. Polyamid 6 kann gegebenenfalls als Compound mit Komponente CS 1 eingetragen werden. Auch Nebenprodukte aus der Herstellung dieser Säuren können geeignet sein. In einer sehr bevorzugten Ausführungsform besteht die Komponente CS4 vollständig aus natürlichen, gegebenenfalls umgeesterten oder hydrolysierten oder hydratisierten Triglyzeriden. Insbesondere bevorzugt ist der Einsatz von Sojaöl.

Das Polyesterpolyol kann neben den oben genannten Baueinheiten cs1 - cs4 noch weitere Baueinheiten cs5 enthalten, welche sich von solchen Carbonsäuren (CS5) ableiten lassen zu erhalten, welche nicht unter die Komponenten CS1 - CS4 fallen. In einer bevorzugten Ausführungsform enthält PAT-PES keine Baueinheiten cs5.

Die Komponenten CS1 - CS5 können auch in Form von Produktmischungen eingesetzt werden, beispielsweise werden bei der Oxidation von Cyclohexan, wie in WO2010088227 [0036] beschrieben, Mischungen aus Dicarbonsäuren CS3 und Monocarbonsäuren CS4 erhalten, welche als Einsatzstoff geeignet sind.

Bei den Baueinheiten ak1 handelt es sich um solche, welche von ein oder mehreren niedermolekularen Diolen AK1 ausgewählt aus der Gruppe bestehend aus Diolen mit einem Molgewicht <100 g/mol abgeleitet sind. Dazu gehören zum Beispiel Ethandiol sowie die isomeren Butandiole, Butendiole und Butindiole und Propandiole, besonders bevorzugt Ethandiol. Diese Alkohole können auch in Form von Derivaten, z.B. ihren Alkoxylaten oder Estern eingesetzt werden. In einer besonders bevorzugten Ausführungsform stammen die Baueinheiten ak1 in dem Polyester PAT-PES aus Polyethylenterephthalat, aus welchem auch die Baueinheiten cs1 stammen.

Bei den Baueinheiten ak2 handelt es sich um solche, welche von ein oder mehreren niedermolekularen Diolen AK2 ausgewählt aus der Gruppe bestehend aus Diolen mit einem Molekulargewicht von 100-190 g/mol abgeleitet sind. Die Alkohole AK2 weisen im Mittel >80 mol-% primäre aliphatische OH-Funktionen auf. In einer bevorzugten Ausführungsform weist die Komponente AK2 100 mol-% primäre aliphatische OH-Funktionen auf. Zu dieser Gruppe gehören beispielsweise die Verbindungen Diethylenglykol, Triethylenglykol, 1,5-Pentandiol, Neopentylglykol, 1,6-Hexandiol und 2-Butyl-2-ethyl-1,3-propandiol. Die genannten Glykole können auch in Form ihrer Derivate, z.B. zyklische Carbonate, als Ketale und/oder Acetale eingesetzt werden. Die Gruppe enthält jedoch keine aromatischen Diole bzw. deren Derivate wie Alkoxylate und Carbonate. In einer bevorzugten Ausführungsform enthält die Komponente AK2 mehr als 80 mol% Diethylenglykol. In geringer Menge kann die Komponente AK2 auch Diole mit sekundären Hydroxylgruppen enthalten, beispielsweise Isosorbit und Dipropylenglykole.

Bei den Baueinheiten ak3 handelt es sich um solche, welche von ein oder mehreren niedermolekularen Diolen ausgewählt aus der Gruppe bestehend aus Diolen mit einem Molekulargewicht >190 g/mol, bevorzugt 191 - 800 g/mol, (AK3) abgeleitet sind. Hierzu gehören modifizierte Diole der Gruppe AK2, wie z.B. 2,3-Dibrombuten-1,4-diol, und höhermolekulare Diole, insbesondere oligomere und polymere Polyalkylenoxide wie z.B. Polyethlenglykole, Tripropylenglykole und Alkoxylate von Dihydroxybenzol. In einer bevorzugten Ausführungsform werden in der Synthese des Polyesters PAT-PES keine Bisphenole vom Typ X(C₆H₄-OH)₂ (X = CH₂, C(CH₃)₂, S, SO₂) und ihre Carbonate und Alkylenoxid-Addukte eingesetzt.

In bestimmten Ausführungsformen kann AK3 auch > 3 Mol% Polyethylenglykol, insbesondere 3,1 - 15 %, mehr besonders 4 - 10 Mol% enthalten. Dies kann sich günstig auf die Elastizität in der Dämmplatte auswirken.

Bei den Baueinheiten ak4 handelt es sich um solche, welche von ein oder mehreren Verbindungen ausgewählt aus der Gruppe bestehend aus Polyhydroxylverbindungen mit einer Funktionalität ≥3 abgleitet sind (AK4), wie z. B. Pentaerythrol und die Nebenkomponenten bei seiner Herstellung, Trimethylolalkane wie Trimethylolpropan, insbesondere Glyzerin, welches insbesondere aus eingesetzten Fettsäurederivaten stammt.

Bei den Baueinheiten ak5 handelt es sich um solche, welche von ein oder mehreren Verbindungen ausgewählt aus der Gruppe bestehend aus Monoolen (AK5) abgeleitet sind, z.B. nichtionische Tenside, beispielsweise alkoxylierte Di-und Alkyl- und Styrylphenole, alkoxylierte C8-C20 Monocarbonsäuren und C8-C20 Monole und deren Alkoxylate. Die Alkohole können auch in Form ihrer Derivate eingesetzt werden. In einer bevorzugten Ausführungsform werden in der Synthese des Polyesters PAT-PES keine alkoxylierten Octyl- Nonylphenole eingesetzt.

Die oben beschriebenen Alkohole (AK) können auch alle in der Form ihrer Derivate eingesetzt werden, aus denen sich bei der Polyestersynthese die Baueinheiten ak1 - ak5 im Polyester PAT-PES ergeben, z.B. in Form ihrer Ester in Verbindung mit einer der Säurekomponenten CS 1 - CS5. Die mehrwertigen Alkohole können alle auch in Form ihrer Derivate, z.B. auch in Form ihrer zyklischen Carbonate, Ketale und Acetale eingesetzt werden.

In einer Ausführungsform führt der Stickstoffgehalt in den Ausgangskomponenten der Polyestersynthese zu einem Stickstoffgehalt von mindestens 0,1 Gew.-% im Polyester PAT-PES.

In einer bevorzugten Ausführungsform führt der Stickstoffgehalt in den Ausgangskomponenten der Polyestersynthese zu einem Stickstoffgehalt von weniger als 0,1 Gew.-% im Polyester PAT-PES.

Die Herstellung der Polyesterpolyole PAT-PES kann nach dem Fachmann bekannten Methoden erfolgen.

Gegenstand der Erfindung ist daher auch ein Verfahren zur Herstellung eines Polyesterpolyols PAT-PES, bei dem ein Gemisch CS aus Carboxy-funktionellen Verbindungen umfassend:

| | |
|---|---|
| CS1 | eine Verbindung ausgewählt aus der Gruppe bestehend aus Terephthalsäure und Derivaten der Terephthalsäure, |
| CS2 | mindestens eine von CS 1 verschiedene Verbindung ausgewählt aus der Gruppe bestehend aus aromatischen Dicarbonsäuren und deren Derivate, insbesondere ein niedermolekulares Derivat, ganz besonders bevorzugt Phthalsäureanhydrid |
| CS3 | mindestens eine Verbindung ausgewählt aus der Gruppe bestehend aus aliphatischen Dicarbonsäuren und deren Derivaten, |
| CS4 | mindestens eine Verbindung ausgewählt aus der Gruppe bestehend aus Monocarbonsäuren mit einem Molgewicht ≥100 g/mol und deren Derivaten, |
| CS5 | optional weitere Carbonsäuren und / oder deren Derivate, |

mit einem Gemisch AK aus alkoholischen Verbindungen umfassend:

| | |
|---|---|
| AK1 | mindestens eine Verbindung ausgewählt aus der Gruppe bestehend aus Diolen mit einem Molgewicht <100 g/mol und deren Derivate, |
| AK2 | mindestens eine Verbindung ausgewählt aus der Gruppe bestehend aus Diolen mit einem Molgewicht von 100-190 g/mol, bevorzugt mit >80 mol-% der OH-Funktionen primäre aliphatische OH-Funktionen, und deren Derivate, |
| AK3 | optional eine oder mehrere Verbindungen ausgewählt aus der Gruppe bestehend aus Diolen mit einem Molgewicht von > 190 g/mol, bevorzugt 191 - 800 g/mol, oder deren Derivate, |
| AK4 | optional eine oder mehrere Verbindungen ausgewählt aus der Gruppe bestehend aus bestehend aus Polyhydroxylverbindungen mit einer Funktionalität ≥3 und mit einem Molgewicht 90-190 g/mol (keine Polyether) und deren Derivaten |
| AK5 | optional ein oder mehrere Monoole, z. B. nichtionische Tenside, und / oder Derivate dieser Alkohole, |

optional in Gegenwart eines Veresterungskatalysators K. Insbesondere werden die Edukte bevorzugt in Gegenwart von 0-0,2 Gew.-% bezogen auf die Summe von CS und AK, eines Metallsalzes miteinander umgesetzt.

Als Katalysatoren K kommen im Prinzip sämtliche für die Herstellung von Polyestern bekannte Katalysatoren in Frage. Dies sind beispielsweise Zinn-Salze, z.B. Zinndichlorid oder Zinndiethylhexanoat, Titanate, z.B. Tetrabutyltitanat oder Tyzor EZ oder starke Säuren, z.B. p-Toluolsulfonsäure, sowie Organozinnverbindungen, z.B. Dibutylzinndilaurat oder Salze des Wismuts, sowie die Carboxylate des Zinks, des Mangans, und anderer Übergangsmetalle. Die Polyesterpolyole PAT-PES können aber auch ohne den Einsatz von Katalysatoren hergestellt werden. Der Katalysator kann zu Beginn, oder im Laufe der Reaktion zugegeben werden und auch ggf. im Laufe der Reaktion gezielt desaktiviert werden.

Bei der Veresterungsreaktion kann in an sich bekannter Weise so vorgegangen werden, dass mindestens die Edukte vorgelegt und durch Erhitzen zur Reaktion gebracht werden. Normalerweise werden die Polyesterpolyole ohne Verwendung eines Lösungsmittels hergestellt. Das Austragen des Reaktionswassers in der lösungsmittelfreien Variante wird bevorzugt durch Anlegen eines Unterdrucks, insbesondere gegen Ende der Veresterung, unterstützt. Das Austragen des Reaktionswassers kann auch durch Durchleiten eines inerten Gases, etwa Stickstoff oder Argon, unterstützt werden. Hierbei werden Drücke von 1 bis 500 mbar angewendet. Eine Veresterung ist jedoch auch oberhalb 500 mbar möglich. Die Veresterung kann jedoch auch unter Zusatz eines Lösungsmittels erfolgen, insbesondere eines wasserschleppenden Lösungsmittel (Azeotropveresterung), wie etwa Benzol, Toluol oder Dioxan.

Bei Einsatz von Carbonsäureestern werden die erfindungsgemäßen Polyesterpolyole durch Umesterung hergestellt. Werden Ester der Carbonsäuren mit niedermolekularen Alkoholen eingesetzt, können die in den niedermolekularen Estern enthaltenen Alkohole dem Reaktionsgemisch entzogen werden. Häufig werden die Dimethyl - oder Diethylester eingesetzt. Hierbei können ebenfalls Lösungsmittel, wie etwa Benzol, Toluol oder Dioxan, verwendet werden, um die in den niedermolekularen Estern enthaltenen Alkohole dem Reaktionsgemisch azeotrop zu entziehen.

Die Veresterung bzw. Umesterungsreaktion wird bevorzugt bei reduzierten Drücken von 1 bis 600 mbar, insbesondere bei Drücken unter 500 mbar, durchgeführt.

Insbesondere kann das Polyesterpolyol PAT-PES durch eine einstufige Veresterungsreaktion oder Umesterungsreaktion der Säurekomponenten CS und der alkoholischen Komponenten AK hergestellt werden.

In einer anderen, ebenfalls bevorzugten Ausführungsform wird das Polyesterpolyol PAT-PES in einer zweistufigen Veresterungsreaktion hergestellt. In diesem Fall werden in der ersten Stufe bevorzugt die Komponenten CS 1 und CS4 mit allen Verbindungen oder einem Teil der Verbindungen der Komponente AK zusammengegeben und zur Reaktion gebracht, und in der zweiten Stufe das Produkt der ersten Stufe mit den Komponenten CS2, CS3, ggfs. CS5 und den restlichen Verbindungen der Komponente AK umgesetzt.

Die Einwaagen der Ausgangskomponenten für die Polyestersynthese CS1 - CS5 und AK1 - AK5 werden nach dem Fachmann bekannten Methoden so berechnet, dass sich in der Bilanz die Zusammensetzung des Polyesterpolyols PAT-PES ergibt. Niedermolekulare Reaktanden, die während der Reaktion dem Reaktionsgemisch wieder entzogen werden, sind selbstverständlich abzuziehen.

In einer besonders bevorzugten Ausführungsform enthalten die Ausgangskomponenten für die Polyestersynthese Polyalkylenterephthalat, insbesondere Polyethylenterephthalat (CS1 und AK1).

Die vorliegende Erfindung betrifft des Weiteren die Verwendung eines erfindungsgemäßen Polyesterpolyols PAT-PES basierend auf Polyalkylenterephthalaten für die isocyanat-reaktive Komponente B) eines zweikomponentigen Reaktionssystems zur Herstellung von PUR-/PIR-Hartschaumstoffen.

Weiterhin betrifft die Erfindung ein Reaktionssystem zur Herstellung von PUR- und PUR-/PIR-Hartschaumstoffen, umfassend die folgenden Komponenten:
A) eine organische Polyisocyanatkomponente;
B) eine isocyanat-reaktive Komponente umfassend das Polyesterpolyol PAT-PES,
C) optional Hilfs- und Zusatzstoffe sowie
D) optional Treibmittel und Co-Treibmittel,
wobei die organische Polyisocyanatkomponente A) zu den Komponenten B) und ggf. C) in einem solchen Mengenverhältnis zueinander eingesetzt sind, dass sich ein Index von 100 bis 500 ergibt, insbesondere von 140 bis 450 und das Reaktionssystem dadurch gekennzeichnet ist, dass die Polyolkomponente B) mindestens ein erfindungsgemäßes Polyesterpolyol PAT-PES umfasst.

Mit Index, bzw. Kennzahl wird das molare Verhältnis aller NCO-Gruppen der Komponente A) zu allen NCO reaktiven Gruppen in dem Reaktionssystem, vorliegend also der Komponenten B) und C) bezeichnet.

Zudem betrifft die Erfindung die Verwendung der erfindungsgemäßen Polyesterpolyole PAT-PES bei der Herstellung von Polyurethan-Hartschaum-Produkten, wie zum Beispiel Polyurethan-Dämmplatten, Metall-Verbund-Elementen, Polyurethan-Blockschaum, Polyurethan-Sprühschaum, Polyurethan-Ortschäume oder auch in Ein- oder Mehrkomponenten-Montageschaum oder als Klebstoff-Rohstoff.

Die Erfindung betrifft auch die Verwendung der erfindungsgemäßen Polyesterpolyole PAT-PES als oder in der Komponente B) eines Reaktionssystems zur Herstellung von PUR(Polyurethan)- und PUR/PIR-Hartschaumstoffen. Unter PUR/PIR-Hartschaumstoffen werden solche Polyurethan-Hartschaumstoffe verstanden, die Polyisocyanurat-modifizierte Urethan-Strukturen enthalten. Solch ein Reaktionssystem für PUR/PIR-Hartschaumstoffe eignet sich in bevorzugter Weise für die Herstellung von Polyurethan-Hartschaum-Produkten, wie zum Beispiel Polyurethan-Dämmplatten, Metall-Verbund-Elementen, Polyurethan-Blockschaum, Polyurethan-Sprühschaum, Polyurethan-Ortschäume oder auch in Ein- oder Mehrkomponenten-Montageschaum oder als Klebstoff-Rohstoff.

Die isocyanat-reaktive Komponente B) enthält mindestens ein erfindungsgemäßes Polyesterpolyol PAT-PES und kann darüber hinaus auch weitere isocyanat-reaktive Komponenten enthalten, beispielsweise weitere Polyole, niedermolekulare Kettenverlängerer und Vernetzer. Bei weiteren Polyolen handelt es sich insbesondere um solche Polyole die ausgewählt sind aus der Gruppe bestehend aus Polyesterpolyolen, Polyetherpolyolen, Polycarbonatdiolen, Polyether-Polycarbonatdiole und Polyetheresterpolyolen enthalten.

Der Anteil an Verbindungen aus der Gruppe bestehend aus Polyesterpolyolen und Polyetheresterpolyolen, zu denen auch die Verbindungen PAT-PES gehören, in der Komponente B) beträgt, bezogen auf das Gesamtgewicht der Komponente B), bevorzugt mindestens 40 Gew.-% und besonders bevorzugt mindestens 50 Gew.-% und ganz besonders bevorzugt mindestens 55 Gew.-%. In einer bevorzugten Ausführungsform beträgt der Anteil an Polyesterpolyol in der Komponente B) 60 - 100 Gew.-%.

Neben den Verbindungen PAT-PES weitere geeignete Polyesterpolyole sind unter anderem Polykondensate aus Di- sowie weiterhin Tri- und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Die Polyesterpolyole können aus aromatischen und / oder aliphatischen Bausteinen hergestellt werden.

In bestimmten Ausführungsformen ist der Einsatz von Polyestern enthaltend aliphatische Dicarbonsäuren (z.B. Glutarsäure, Adipinsäure, Bernsteinsäure) bevorzugt, insbesondere der Einsatz von rein aliphatischen Polyestern (ohne aromatische Gruppen). Als Säurequelle können auch die entsprechenden Anhydride verwendet werden. Es können zusätzlich auch Monocarbonsäuren wie Benzoesäure und Alkancarbonsäuren mitverwendet werden.

Zur Herstellung der Polyesterpolyole kommen auch biobasierte Ausgangsstoffe und/oder deren Derivate in Frage, wie z. B. die oben unter der Beschreibung der Komponente CS4 genannten biobasierten Ausgangsstoffe. Der anteilige Einsatz insbesondere von Fettsäuren bzw. Fettsäurederivaten (Ölsäure, Sojaöl etc.) kann Vorteile aufweisen, z.B. im Hinblick auf Lagerstabilität der Polyolformulierung, Dimensionsstabilität, Brandverhalten und Druckfestigkeit der Schäume.

Die Polyesterpolyole weisen bevorzugt eine Säurezahl 0 - 5 mg KOH/g auf. Dies stellt sicher, dass eine Blockade aminischer Katalysatoren durch Überführung in Ammoniumsalze nur begrenzt erfolgt und die Reaktionskinetik der Schäumreaktion wenig beeinträchtigt wird.

Polyetheresterpolyole enthalten neben den Estergruppen auch Ethergruppen und OH-Gruppen. Zu ihrer Herstellung werden neben den Polyesterkomponenten werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten. Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoffaktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Bevorzugt sind in B) neben PAT-PES weitere Polyesterpolyole und/oder Polyetheresterpolyole enthalten, welche Funktionalitäten von ≥1,2 bis ≤ 3,5, insbesondere ≥1,6 bis ≤ 2,4 und eine Hydroxylzahl zwischen 80 bis 290 mg KOH/g, besonders bevorzugt 150 bis 270 mg KOH/g und insbesondere bevorzugt von 160 - 260 mg KOH/g, aufweisen. Vorzugsweise besitzen die Polyesterpolyole und Polyetheresterpolyole mehr als 70 mol%, bevorzugt mehr als 80 mol%, insbesondere mehr als 90 mol%, primäre OH-Gruppen.

Daneben kann es vorteilhaft sein, einen Gehalt von bis zu 5 Gew.-% (bezogen auf B) eines aromatischen Polyesterpolyols mit einer Hydroxylzahl von 320 bis 450 mg KOH/g und einer mittleren Funktionalität von 3 bis 4,5.

Der Zusatz von langkettigen Polyolen, insbesondere Polyetherpolyolen, kann die Verbesserung der Fließfähigkeit des Reaktionsgemisches und die Emulgierfähigkeit der treibmittelhaltigen Formulierung bewirken. Für die Herstellung von Verbundelementen können diese die kontinuierliche Produktion von Elementen mit flexiblen oder starren Deckschichten ermöglichen.

Diese langkettigen Polyole weisen Funktionalitäten von ≥ 1,2 bis ≤ 3,5 auf und besitzen eine Hydroxylzahl zwischen 10 und 100 mg KOH/g, bevorzugt zwischen 20 und 50 mg KOH/g. Sie besitzen mehr als 70 mol%, bevorzugt mehr als 80 mol%, insbesondere mehr als 90 mol% primäre OH-Gruppen. Die langkettigen Polyole sind bevorzugt Polyetherpolyole mit Funktionalitäten von ≥1,2 bis ≤ 3,5 und einer Hydroxylzahl zwischen 10 und 100 mg KOH/g.

Der Zusatz von mittelkettigen Polyolen, insbesondere Polyetherpolyolen, und niedermolekularen isocyanat-reaktiven Verbindungen, kann die Verbesserung der Haftung und Dimensionsstabilität des resultierenden Schaumes bewirken. Für die Herstellung von Verbundelementen mit dem erfindungsgemäßen Verfahren können diese mittelkettigen Polyole die kontinuierliche Produktion von Elementen mit flexiblen oder starren Deckschichten ermöglichen. Die mittelkettigen Polyole, bei denen es sich insbesondere um Polyetherpolyole handelt, weisen Funktionalitäten von ≥ 2 bis ≤ 6 auf und besitzen eine Hydroxylzahl zwischen 300 und 700 mg KOH/g.

Bei den verwendeten Polyetherpolyolen handelt es sich um die dem Fachmann bekannten, in der Polyurethansynthese einsetzbaren Polyetherpolyole mit den genannten Merkmalen.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit CO2 erhältlich sind.

Neben den beschrieben Polyolen können in B) weitere isocyanat-reaktive Verbindungen enthalten sein, z.B. Polyamine, Polyhydroxyverbindungen, Polyaminoalkohole und Polythiole. Insbesondere werden auch niedermolekulare Kettenverlängerer und Vernetzer einsetzt. Selbstverständlich umfassen die beschriebenen Isocyanat-reaktiven Komponenten auch solche Verbindungen mit gemischten Funktionalitäten. Diese Zusätze können eine Verbesserung der Fließfähigkeit des Reaktionsgemisches und der Emulgierfähigkeit der treibmittelhaltigen Formulierung bewirken.

Die zahlengemittelte Molmasse Mₙ (auch: Molekulargewicht) wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2 (1998).

Die "Säurezahl" wird im Rahmen der vorliegenden Erfindung bestimmt nach der Norm DIN EN ISO 2114:2002-06.

"Funktionalität" bezeichnet im Rahmen der vorliegenden Erfindung die theoretische, aus den bekannten Einsatzstoffen und deren Mengenverhältnissen berechnete mittlere Funktionalität (zahlengemittelte Anzahl an gegenüber Isocyanaten bzw. gegenüber Polyolen reaktiven Funktionen im Molekül).

Die "Viskosität" bzw. "dynamische Viskosität" bezeichnet im Rahmen der vorliegenden Erfindung die dynamische Viskosität, welche bestimmt werden kann entsprechend DIN 53019-1 (September 2008).

Im Sinne dieser Anmeldung kann es sich bei "einem Polyesterpolyol" auch um eine Mischung unterschiedlicher Polyesterpolyole handeln, wobei in diesem Fall die Mischung der Polyesterpolyole als gesamtes die genannte OH-Zahl aufweist. Analog gilt dies für die weiteren hier aufgeführten Polyole und Komponenten.

Die Komponente A) ist ein Polyisocyanat, also ein Isocyanat mit einer NCO-Funktionalität von ≥ 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Polyisocyanatkomponente A) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenylmethylen-diisocyanates, welche eine NCO - Funktionalität f > 2 aufweisen und sich durch folgende Summenformel beschreiben lassen: C₁₅H₁₀N₂O₂[C₈H₅NO]ₙ, wobei n = ganze Zahl > 0, bevorzugt n = 1, 2, 3 und 4, ist. Höherkernige Homologe C₁₅H₁₀N₂O₂[C₈H₅NO]ₘ, m = ganze Zahl ≥ 4) können ebenfalls im Gemisch aus organischen Polyisocyanaten A) enthalten sein. Als Polyisocyanat-Komponente A) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Die Polyisocyanat-Komponente A) zeichnet sich weiterhin dadurch aus, dass sie vorzugsweise eine Funktionalität von mindestens 2, insbesondere mindestens 2,2, besonders bevorzugt mindestens 2,4, und ganz besonders bevorzugt mindestens 2,7 aufweist.

Für den Einsatz als Polyisocyanat-Komponente sind polymere MDI-Typen im Hartschaum gegenüber monomeren Isocyanaten besonders bevorzugt.

Die Hilfs- und Zusatzstoffe C) umfassen insbesondere Katalysatoren, Emulgatoren und Flammschutzmittel.

Als geeignete Emulgatoren, die auch als Schaumstabilisatoren dienen, können beispielsweise alle handelsüblichen durch Polyetherseitenketten modifizierten Silikonoligomere eingesetzt werden, die auch zur Herstellung von herkömmlichen Polyurethanschäumen eingesetzt werden. Falls Emulgatoren eingesetzt werden, handelt es sich um Mengen von bevorzugt bis zu 8 Gew.-%, besonders bevorzugt von 0,5 bis 7,0 Gew.-%, jeweils bezogen auf das Gesamtgewicht der Komponenten B und C. Bevorzugte Emulgatoren sind Polyetherpolysiloxancopolymerisate. Solche sind beispielsweise unter der Bezeichnung Tegostab^{®} B84504 und B8443 der Firma Evonik, Niax* L-5111 der Firma Momentive Performance Materials, AK8830 der Firma Maystar sowie Struksilon 8031 der Fa. Schill und Seilacher am Markt erhältlich. Auch silikonfreie Stabilisatoren, wie bspw. das Produkt LK 443 von Air Products, können eingesetzt werden.

Zur Verbesserung der Brandbeständigkeit werden den Isocyanat-reaktiven Zusammensetzungen zudem Flammschutzmittel zugesetzt. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Ester der Orthophosphorsäure und der Metaphosphorsäure, die ebenfalls Halogen enthalten können, sein. Bevorzugt werden bei Raumtemperatur flüssige Flammschutzmittel gewählt. Beispiele sind Triethylphosphat, Diethylethanphosphonat, Kresyldiphenylphosphat, Dimethylpropanphosphonat und Tris([3-chlorisopropyl)phosphat. Besonders bevorzugt sind Flammschutzmittel ausgewählt aus der Gruppe bestehend aus Tris(chloro-2-propyl)-phosphat (TCPP) und Triethylphosphat (TEP) und Mischungen daraus. Bevorzugt werden Flammschutzmittel in einer Menge von 1 bis 30 Gew.-%, besonders bevorzugt 5 bis 30 Gew.- %, bezogen auf das Gesamtgewicht der Komponenten B und C eingesetzt. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren. In bestimmten Ausführungsformen ist die Anwesenheit von Triethylphosphat (TEP) im Flammschutzmittelgemisch oder als alleiniges Flammschutzmittel besonders vorteilhaft. Zu C) zählen auch Isocyanat-reaktive Flammschutzmittel wie die Ester bromierter Phthalsäuren oder Derivate des Dibrombutendiols, wie sie z. B. unter dem Markennamen Ixol^{®} vertrieben werden.

Zweckmäßigerweise werden der Reaktionsmischung in der Polyurethanchemie übliche Katalysatoren zugesetzt. Die zur Herstellung eines PUR-/PIR-Hartschaumstoffes nötigen aminischen Katalysatoren sowie die als Trimerisationskatalysatoren eingesetzten Salze werden in solcher Menge eingesetzt, dass z.B. auf kontinuierlich produzierenden Anlagen Elemente mit flexiblen Deckschichten mit Geschwindigkeiten bis zu 60 m/min je nach Elementstärke produziert werden können als auch für Isolationen an Rohren, Wänden, Dächern sowie Tanks und in Kühlschränken im Sprühschaumverfahren mit hinreichender Aushärtezeit hergestellt werden können. Auch eine diskontinuierliche Herstellung ist möglich.

Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid oder Gemische dieser Katalysatoren.

Weiterhin umfasst die Komponente C) auch alle anderen Additive, die Polyurethanreaktionsmischungen zugesetzt werden können. Beispiele für solche Additive sind Zellregulantien, Thixotropiermittel, Weichmacher und Farbstoffe.

Für die PUR/PIR-Hartschaumstoffe weiterhin eingesetzt werden soviel Treibmittel und Co-Treibmittel D), wie zur Erzielung einer dimensionsstabilen Schaummatrix und gewünschten Rohdichte nötig ist. Der Anteil kann beispielsweise von 0 bis 6,0 Gew.-% an Co-Treibmittel und von 1,0 bis 30,0 Gew.-% an Treibmittel betragen, jeweils bezogen auf 100 Gew.-% Polyolkomponente inklusive der Hilfs- und Zusatzstoffe. Das Mengenverhältnis von Co-Treibmittel zu Treibmittel kann ja nach Bedarf von 20:1 bis 0: 100 betragen.

Als Treibmittel werden Kohlenwasserstoffe, z.B. die Isomeren des Butans und Pentans, Ester wie Methylformiat oder Acetale wie Methylal und Ethylal oder Fluorkohlenwasserstoffe, z.B. HFC 245fa (1,1,1,3,3-Pentafluorpropan), HFC 365mfc (1,1,1,3,3-Pentafluorbutan) oder deren Mischungen mit HFC 227ea (Heptafluorpropan) verwendet. Auch mit Fluor und mit Fluor und Chlor gemischt substituierte C3-C5 Olefine können eingesetzt werden. Es können auch verschiedene Treibmittelklassen kombiniert werden. So lassen sich z.B. mit Mischungen von n- oder c-Pentan mit HFC 245fa im Verhältnis 75:25 (n-/c-Pentan:HFC 245fa) Wärmeleitfähigkeiten, gemessen bei 10°C, von weniger als 20 mW/mK erzielen.

Als Co-Treibmittel können auch Wasser und / oder Ameisensäure eingesetzt werden, bevorzugt in einer Menge bis 6 Gew.-%, bevorzugt 0,5 bis 4 Gew.-%, bezogen auf die Gesamtmenge an Verbindungen mit gegenüber Isocyanatgruppen reaktiven Wasserstoffatomen in der Polyolkomponente. Es kann aber auch kein Wasser verwendet werden. Auch Carbaminsäure, Malonsäure und Oxalsäure bzw. insbesondere ihre Salze mit Ammoniak und anderen Aminen können als Treibmittel geeignet sein.

In bevorzugter Ausgestaltung des erfindungsgemäßen Reaktionssystems beträgt das Gewichtsverhältnis der Komponenten A) und B) zueinander von 100 : 150 bis 100 : 300, insbesondere von 100 : 180 bis 100 : 250.

Die mit dem erfindungsgemäßen Verfahren hergestellten Polyesterpolyole PAT-PES eignen sich insbesondere gut für den Einsatz in PUR-PIR-Hartschaumrezepturen. Die mit den Polyesterpolyolen hergestellten PUR-/PIR-Hartschäume weisen eine Kombination von guten Brandschutzeigenschaften und mechanischen Eigenschaften auf.

Ein weiterer Gegenstand der Erfindung ist ein Verfahren zur Herstellung von PUR-/PIR-Hartschaumstoffen, bei dem man die Komponenten A) und B) sowie gegebenenfalls C) eines erfindungsgemäßen Reaktionssystems miteinander vermischt und reagieren lässt.

Die Herstellung der PUR-/PIR-Hartschaumstoffe, welche ebenfalls Gegenstand der Erfindung sind, erfolgt typischerweise nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden
Ein solcher Hartschaumstoff kann in verschiedenen Anwendungsgebieten zum Einsatz kommen, vor allem als Isoliermaterial. Beispiele aus dem Bauwesen sind Wandisolationen, Rohrschalen bzw. Rohrhalbschalen, Dachisolierungen, Wandelemente und Fußbodenplatten. Insbesondere kann der Hartschaumstoff in Form einer Dämmplatte oder als Verbundelement (Laminate) mit flexiblen oder nicht-flexiblen Deckschichten vorliegen und eine Dichte von 25 bis 65 kg/ m³ aufweisen, insbesondere 28 bis 45 kg/m³. In einer anderen Ausgestaltung kann der Hartschaumstoff als Blockschaum vorliegen und eine Dichte von 25 bis 300 kg/m³ aufweisen, insbesondere 30 bis 80 kg/m³.

Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln. Die Deckschichten werden von einer Rolle abgecoilt und gegebenenfalls profiliert, ggf. erwärmt und ggf. coronabehandelt, um die Beschäumbarkeit der Deckschichten zu verbessern. Auf die untere Deckschicht kann vor dem Auftragen des PUR/PIR-Hartschaumstoffsystems zusätzlich ein Primer aufgetragen werden.

In einer bevorzugten Ausführungsform umfasst eine isocyanat-reaktive Zusammensetzung für die Herstellung von PUR-/PIR-Hartschaumstoffen
B) 50 bis 95 Gew.-% mindestens einer Verbindung B1) ausgewählt aus der Gruppe enthaltend Polyesterpolyolen und Polyetheresterpolyolen mit einer Hydroxylzahl im Bereich von 80 mg KOH/g bis 290 mg KOH/g, umfassend ein oder mehrere Polyole PAT-PES,
und weiterhin
5,0 - 15,0 Gew.-% wenigstens eines Polyols B2) mit einer Hydroxylzahl im Bereich von 150 - 300 mg KOH/g, hergestellt durch Alkoxylierung von Propylenglykol oder Ethylenglykol mit Ethylenoxid (EO) und/oder Propylenoxid (PO),
wobei die Angaben in Gew.-% jeweils auf alle Komponenten der isocyanatreaktiven Zusammensetzung B) bezogen sind.

Diese isocyanatreaktive Zusammensetzung lässt sich insbesondere vorteilhaft für die Herstellung von Reaktionsgemischen für PUR-/PIR-Hartschäume einsetzen, die für Dämmplatten verwendet werden.

In einer bevorzugten Ausführungsform umfasst eine isocyanat-reaktive Zusammensetzung für die Herstellung von PUR-/PIR-Hartschaumstoffen
B) eine isocyanat-reaktive Zusammensetzung, umfassend
50-80 Gew.-% mindestens einer Verbindung B1) ausgewählt aus der Gruppe enthaltend Polyesterpolyolen und Polyetheresterpolyolen mit einer Hydroxylzahl von 100 bis 300 mg KOH/g und einer mittleren Funktionalität von 1,5 bis 2,5, umfassend ein oder mehrere Polyole PAT-PES, und
0-5 Gew.-% eines aromatischen und/oder aromatisch/aliphatischen Polyesterpolyols B2) mit einer Hydroxylzahl von 320 bis 450 mg KOH/g und einer mittleren Funktionalität von 3 bis 4,5
3-15 Gew.-%, insbesondere 5,5 - 15 Gew.-%, und ganz besonders 7,0 - 15 Gew.-% eines Polyetherpolyols B3) mit einer OH-Zahl von 10 bis 80 KOH/g und mit mittleren Funktionalitäten von ≥1,2 bis ≤ 3,5, insbesondere mit einer mittleren Funktionalität von ≥ 1,8 bis ≤ 3,0 oder, in einer anderen Ausführungsform, von ≥ 2,0 bis ≤3,0, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO, sowie
0 - 7,5 Gew.-% (insbesondere bevorzugt 0 - 5 Gew.-%) eines Polyetherpolyols B4) mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid,
0 - 3,0 Gew.-% (insbesondere bevorzugt 0 - 2,5 Gew.-%) eines Polyesterpolyols B5) mit einer OH-Zahl im Bereich von 600 - 900 mg KOH/g, insbesondere von 750 - 850 mg KOH/g;
0 - 5 Gew.-% (insbesondere bevorzugt 0 - 3 Gew.-%) niedermolekulare isocyanat - reaktive Verbindungen,
0 - 1,5 Gew.-% Wasser B5) und
0 - 7,5 Gew.-% (insbesondere bevorzugt 0 - 5 Gew.-%) Rizinusöl B6),
wobei die Angaben in Gew.-% jeweils auf alle Komponenten der isocyanat-reaktiven Zusammensetzung B) bezogen sind.

Diese isocyanat-reaktive Zusammensetzung lässt sich insbesondere vorteilhaft für die Herstellung von Reaktionssystemen für PUR-/PIR-Hartschäume einsetzen, die für Metallverbundsysteme verwendet werden.

Zur Herstellung der Reaktionsgemische werden die oben genannten isocyanat-reaktiven Zusammensetzungen mit
A) einer Polyisocyanatkomponente, bevorzugt einem Gemisch von Diphenylmethan-4,4'-diisocyanat mit Isomeren und höherfunktionellen Homologen,

wobei die Angaben in Gew.-% jeweils auf alle Komponenten der isocyanatreaktiven Zusammensetzung B) bezogen sind,
in Gegenwart von gegebenenfalls Hilfs- und Zusatzstoffen C)
und einem Treibmittel und gegenenfalls Co-Treibmittel D),
wobei der Isocyanat-Index ≥ 140 bis ≤ 450 beträgt.

Überraschenderweise wurde gefunden, dass der Zusatz von einer isocyanatreaktiven Komponente B2) zu einer deutlichen Verbesserung der Sprödigkeit, der Offenzelligkeit und des Brandverhaltens bei den Schäumen führt.

Die vorliegende Erfindung wird anhand der nachfolgenden Beispiele näher erläutert.

### Beispiele

### Methoden und Begriffe

| | |
|---|---|
| OH-Zahl: | Die Bestimmung der OH-Zahl (Hydroxylzahl) erfolgte gemäß der Vorschrift der DIN 53240-1 (Verfahren ohne Katalysator, Juni 2013). |
| Säurezahl: | Die Bestimmung der Säurezahl erfolgte gemäß DIN EN ISO 2114 (Juni 2002). |
| Viskosität: | Dynamische Viskosität wird gemessen mit einem Rheometer MCR 51 der Firma Anton Paar entsprechend DIN 53019-1 (September 2008) mit einem Messkegel CP 50-1, Durchmesser 50 mm, Winkel 1° bei Scherraten von 25, 100, 200 und 500 s⁻¹. Die erfindungsgemäßen und nicht erfindungsgemäßen Polyole zeigen von der Scherrate unabhängige Viskositätswerte. |
| Kennzahl: | Bezeichnet das mit 100 multiplizierte molare Verhältnis von NCO- zu NCOreaktiven Gruppen einer Rezeptur |
| Rohdichte: | Die Rohdichte wurde gemäß DIN EN ISO 3386-1 (Oktober 2015) bestimmt. |
| Brandeigenschaften: | Die Flammhöhe wurde gemäß ISO 11925-2 (Februar 2020) bestimmt. |

### Materialien

| | |
|---|---|
| Adipinsäure | der Fa. BASF |
| Phthalsäureanhydrid | der Fa. Polynt GmbH |
| Ölsäure | der Fa. Sigma-Aldrich |
| Sojaöl | der Fa. Cargill |
| Diethylenglykol | der Fa. Brenntag GmbH |
| PEG 400 | der Fa. Oqema GmbH, Polyethylenglykol mit einer OH-Zahl von 280 mg |
| KOH/g | |
| Neopentylglykol | der Fa. BASF |
| Glycerin | der Fa. Brenntag GmbH |
| PET | Mahlgut aus PET-Tiefziehschalen-Abfällen, Restgehalt an Polyolefinen ca. 1 Gew.% |
| Zinn(II)chlorid ·2 H₂O | der Fa. Sigma Aldrich, 28 Gew.-%-ige Lösung in Ethylenglykol |
| Hoopol F-1394A | Polyester-Polyol der Firma Synthesia auf Basis von PET |
| Desmophen 4070X | der Fa. Covestro Deutschland AG |
| Levagard TEP | der Fa. Lanxess |
| Bayflex 0650 | der Fa. Covestro Deutschland AG, aliphatisches Polyetherpolyol mit einer OH-Zahl von 28, einer Molmasse von 4000 Da und ca. 90 mol-% primären OH-Endgruppen |
| Additiv 1132 | der Fa. Covestro Deutschland AG, Umsetzungsprodukt aus Phthalsäureanhydrid und Diethylenglykol mit einer Säurezahl von 89 |
| Stabilisator 21AS08 | Silicon-Polyether-Copolymer mit einer OH-Zahl von 12 mg KOH/g der Firma Covestro Deutschland AG |
| Benzyldimethylamin | der Fa. BASF |
| Kaliumacetat | Kaliumacetat, 25 Gew.-% in Diethylenglykol (DEG) |
| Desmodur 44V70L | der Fa. Covestro Deutschland AG mit einem NCO-Gehalt von 30 bis 32 Gew.% |

### Herstellung der Polyesterpolyole PAT-PES

### Beispiel 1:

In einem 4-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 280 g Adipinsäure, 164 g Ölsäure, 142 g Phthalsäureanhydrid und 814 g Diethylenglykol vor und erhitzte unter Stickstoffüberschleierung auf 140 °C. Anschließend wurden 698 g recyceltes PET zugegeben und die Temperatur auf 220 °C erhöht, wobei ab einer Temperatur von ca. 160 °C Reaktionswasser abdestillierte. Nach ca. 2 Stunden kam die Abspaltung des Reaktionswassers zum Erliegen. Die Umsetzung wurde nach Zugabe von 20 ppm Zinn(II)chlorid-dihydrat bei einem Vakuum von 300 mbar und einer Temperatur von 220 °C vervollständigt. Das Rohprodukt wurde bei 80 °C filtriert (3 µ).

### Analyse des Polyesters:

| | |
|---|---|
| Hydroxylzahl: | 245,9 mg KOH/g |
| Säurezahl: | 0,9 mg KOH/g |
| Viskosität: | 2100 mPa*s bei 25 °C |

Die Polyesterpolyole 2 - 7 wurden analog Beispiel 1 hergestellt (Zusammensetzung und Eigenschaften siehe Tabelle 1).

**Tabelle 1: Synthese und Eigenschaften der erfindungsgemäßen und nicht erfindungsgemäßen (*=Vergleich) Polyesterpolyole**

| **Beispiel** | | | **1** | **2** | **3** | **4*** | **5*** | **6*** | **7*** |
|---|---|---|---|---|---|---|---|---|---|
| AK1, CS1 | PET | [Gew.-%] | 33,3 | 34,3 | 33,3 | 33,4 | 36,0 | 33,3 | 34,8 |
| CS2 | Phthalsäureanhydrid | [Gew.-%] | 6,8 | 7,3 | 7,1 | 7,0 | - | 8,6 | 19,4 |
| CS3 | Adipinsäure | [Gew.-%] | 13,3 | 12,6 | 14,0 | 10,4 | 18,6 | 16,9 | - |
| CS4 | Ölsäure | [Gew.-%] | 7,8 | 7,7 | 4,6 | - | 9,2 | - | 7,8 |
| CS4, AK4 | Sojaöl | [Gew.-%] | - | - | - | 8,0 | - | - | - |
| AK2 | Diethylenglykol | [Gew.-%] | 38,8 | 33,1 | 37,0 | 33,0 | 30,2 | 41,1 | 33,9 |
| AK2 | Neopentylglykol | [Gew.-%] | - | 5,0 | - | - | 5,0 | - | 5,1 |
| AK3 | PEG 400 | [Gew.-%] | - | - | 4,0 | 8,3 | - | - | - |
| AK4 | Glycerin | [Gew.-%] | - | - | - | - | 1,0 | - | - |
| K | Zinn(II)chlorid · 2H₂O | [ppm] | 20 | 20 | 20 | 20 | 20 | 20 | 20 |

| **Analytik:** | | | | | | | | | |
|---|---|---|---|---|---|---|---|---|---|
| | OH-Zahl | [mg KOH/g] | 245,9 | 237,9 | 233,0 | 239,1 | 239,1 | 242,8 | 244,1 |
| | Säurezahl | [mg KOH/g] | 0,9 | 0,9 | 1,6 | 1,3 | 0,6 | 1,9 | 1,5 |
| | Viskosität 25 °C | [mPa ·s] | 2100 | 3250 | 3290 | 2500 | 2460 | 5000 | 9800 |
| | Aussehen des Produktes nach 3 Monaten | | klar | klar | klar | Trübe, Sediment | Trübe, Sediment | klar | klar |

| | | | | | | | | | |
|---|---|---|---|---|---|---|---|---|---|
| Beispiel 4* zeigt, dass es für die Komponente AK3 eine Obergrenze gibt, ab der eine Erhöhung des Anteils von ak3 zu ungünstiger Trübung und Sedimentation führt. Beispiel 5* zeigt, dass die Verwendung der Komponenten CS2 notwendig ist, um unerwünschte Trübung und Sedimentation im Polyesterpolyol zu vermeiden. Beispiel 7* zeigt, dass der Verzicht auf die Komponente CS3 zu Viskositäten führt, die eine Verarbeitung des Schaumsystems in industrieller Anwendung erheblich erschweren oder unmöglich machen. | | | | | | | | | |

### Herstellung von PUR-/PIR-Hartschaumstoffen - Freischäume

Alle Schäume in Tabelle 2 wurden mittels Handvermischung im Labormaßstab in Testpäckchen mit Grundfläche 20x20 cm² hergestellt. Die Polyolkomponente enthaltend die Polyole, Additive und Katalysatoren werden vorgelegt. Kurz vor der Vermischung wird die Polyolkomponente auf 23-25°C temperiert, wohingegen die Polyisocyanatkomponente auf eine konstante Temperatur von 30-35°C gebracht wird. Anschließend wird unter Rühren die Polyisocyanatkomponente zur Polyolmischung gegeben, zu der die zur Erreichung einer Kernrohdichte von 38 - 40 kg/m³ benötigte Menge an Pentan zuvor zugewogen worden ist. Die Mischzeit beträgt 6 sec und die Mischgeschwindigkeit des Pendraulik-Rührers beträgt 4200 min-1. Nach 2,5 bzw. 5 Minuten wird die Schaumhärte mittels einer Eindruck-Methode bestimmt. Der Schaum wird anschließend für weitere 24 Stunden 20 bei 23°C gelagert, damit dieser nachreagieren kann.

**Tabelle 2: Zusammensetzung und Eigenschaften von PUR-/PIR-Hartschaumstoffen (Freischäume)**

| Beispiel | | 8* | 9 | 10 | 11* | 12* |
|---|---|---|---|---|---|---|
| Hoopol F-1394A | [Teile] | 77 | - | - | - | - |
| Polyester Beispiel 1 | [Teile] | - | 77 | - | - | - |
| Polyester Beispiel 2 | [Teile] | - | - | 77 | - | - |
| Polyester Beispiel 4* | [Teile] | - | - | - | 77 | - |
| Polyester Beispiel 5* | [Teile] | - | - | - | - | 77 |
| Desmophen 4070X | [Teile] | 2 | 2 | 2 | 2 | 2 |
| Levagard TEP | [Teile] | 10 | 10 | 10 | 10 | 10 |
| Bayflex 0650 | [Teile] | 10 | 10 | 10 | 10 | 10 |
| Wasser | [Teile] | 0,5 | 0,5 | 0,5 | 0,5 | 0,5 |
| Additiv 1132 | [Teile] | 0,5 | 0,5 | 0,5 | 0,5 | 0,5 |
| Zusatzmittel 21AS08 | [Teile] | 2,5 | 2,5 | 2,5 | 2,5 | 2,5 |
| Desmorapid DB | [Teile] | 1,2 | 1,2 | 1,2 | 1,0 | 0,9 |
| Kaliumacetat 25% in DEG | [Teile] | 2,8 | 2,8 | 2,8 | 2,5 | 2,1 |
| n-Pentan | [Teile] | 14,9 | 14,9 | 14,9 | 14,9 | 14,8 |
| Desmodur 44V70L | [Teile] | 215 | 215 | 215 | 215 | 215 |
| Kennzahl | [-] | 350 | 344 | 353 | 367 | 371 |
| Startzeit | [s] | 12 | 12 | 11 | 12 | 10 |
| Abbindezeit | [s] | 35 | 35 | 35 | 36 | 36 |
| Klebfreizeit | [s] | 46 | 44 | 43 | 47 | 45 |
| Kernrohdichte | [kg/m³] | 38,1 | 38,7 | 39,0 | 38,8 | 39,1 |
| Eindrucktiefe nach 2,5 min | [mm] | 6,2 | 6,7 | 6,3 | 6,8 | 8,0 |
| Eindrucktiefe nach 5 min | [mm] | 7,1 | 7,6 | 7,3 | 7,9 | 8,8 |
| Mittlere Flammhöhe | [mm] | 125 | 125 | 125 | 128 | 142 |

| | | | | | | |
|---|---|---|---|---|---|---|
| Versuch 12* zeigt, dass ein Polyesterpolyol ohne Baueinheiten cs2 nicht nur zur Sedimentation neigt, sondern auch zu ungünstig höheren vertikalen Flammhöhen führt. Zusätzlich führt der Verzicht auf die Komponente CS2 im Reaktionsgemisch zu einem im Vergleich zu den erfindungsgemäßen Beispielen ungünstigerem Aushärteverhalten, gekennzeichnet durch höhere Eindrucktiefen. | | | | | | |

### Herstellung von PUR-/PIR-Hartschaumstoffen - Formschäume

Zusätzlich zu den Verschäumungen im Testpäckchen, wie für die Versuche in Tabelle 2 beschrieben, wurden Hartschaumkörper mit einer unteren Metalldeckschicht hergestellt, um das Fließverhalten des Reaktionsgemisches entlang der Deckschicht und das Oberflächenstörbild nach Abriss der Deckschicht zu überprüfen. Dazu wird in einer beheizbaren Form mit verschließbarem Klappdeckel und einstellbarer Neigung, ein 0,45 mm dickes Metallblech mit den Maßen 190 mm x 650 mm als untere Deckschicht eingelegt, die Form auf 60°C temperiert und ein Neigungswinkel von 25° eingestellt. Das Reaktionsgemisch (Zusammensetzung siehe Tabelle 3) wird analog zur Verschäumung im Testpäckchen hergestellt und auf mittlerer Höhe der Form auf die Deckschicht ausgegossen und anschließend der Klappdeckel geschlossen. In dieser Weise fließt das Gemisch zunächst über die untere Deckschicht ab und schäumt anschließend bei Beginn des Schäumprozesses am untersten Punkt der Form entlang des Metallblechs nach oben auf. Die Formstandzeit beträgt dabei ca. 5 min. Nach einer Aushärtungszeit von 24 h, wird das Metallblech entfernt, um die Oberflächenbeschaffenheit zu beurteilen.

**Tabelle 3: Zusammensetzung und Eigenschaften von PUR-/PIR-Hartschaumstoffen (Formschäume)**

| Beispiel | | 13* | 14 | 15* | 16* |
|---|---|---|---|---|---|
| Hoopol | [Teile] | 77 | - | - | - |
| Polyester Beispiel 3 | [Teile] | - | 77 | - | - |
| Polyester Beispiel 6* | [Teile] | - | - | 77 | - |
| Polyester Beispiel 7* | [Teile] | - | - | - | 77 |
| Desmophen 4070X | [Teile] | 2 | 2 | 2 | 2 |
| Levagard TEP | [Teile] | 10 | 10 | 10 | 10 |
| Bayflex 0650 | [Teile] | 10 | 10 | 10 | 10 |
| Wasser | [Teile] | 0,5 | 0,5 | 0,5 | 0,5 |
| Additiv 1132 | [Teile] | 0,5 | 0,5 | 0,5 | 0,5 |
| Zusatzmittel 21AS08 | [Teile] | 2,5 | 2,5 | 2,5 | 2,5 |
| Benzyldimethylamin | [Teile] | 1,2 | 1,2 | 1,2 | 1,2 |
| Kaliumacetat 25% in DEG | [Teile] | 2,8 | 2,4 | 2,8 | 2,8 |
| n-Pentan | [Teile] | 14,9 | 14,9 | 14,9 | 14,9 |
| 44V70L | [Teile] | 215 | 215 | 215 | 215 |
| Kennzahl | [-] | 350 | 363 | 347 | 346 |
| Startzeit | [s] | 14 | 13 | 13 | 13 |
| Abbindezeit | [s] | 41 | 40 | 41 | 41 |
| Klebfreizeit | [s] | 53 | 52 | 53 | 57 |
| Kernrohdichte | [kg/m³] | 38,3 | 39,0 | 37,9 | 38,5 |
| Eindrucktiefe nach 2,5 min | [mm] | 6,6 | 6,2 | 6,6 | 7,8 |
| Eindrucktiefe nach 5 min | [mm] | 7,3 | 7,0 | 7,6 | 8,9 |
| Einstufung nach DIN 4102 | [mm] | B2 | B2 | B2 | B3 |
| Oberfläche | | störungsfrei | störungsfrei | Störungen | störungsfrei |

| | | | | | |
|---|---|---|---|---|---|
| Vergleich 15* zeigt, dass die Präsenz von Komponente CS4 unabdingbar für einen störungsfreien Schaumstoff ist. Vergleich 16* zeigt, dass der Verzicht auf Komponente CS3 zu ungünstigerem Aushärteverhalten, gekennzeichnet durch die Eindrucktiefen, führt als die erfindungsgemäßen Beispiele. | | | | | |

## Patentansprüche

1. Polyesterpolyole **PAT-PES** mit einer dynamischen Viskosität von ≤ 8 Pa*s bei 25°C, welche aufgebaut sind aus Baueinheiten cs, die von Säurekomponenten abgeleitet sind, und Baueinheiten ak, welche von alkoholischen Komponenten abgeleitet sind,
wobei cs aus
| | | | |
|---|---|---|---|
| cs1 | 40-60 | Mol.-% bezogen auf cs, | bevorzugt 45-55 Mol.%, Baueinheiten abgeleitet von Terephthalsäure, |
| cs2 | 8-28 | Mol.-% bezogen auf cs, | bevorzugt 10-20 Mol.-%, Baueinheiten abgeleitet von mindestens einer weiteren aromatischen Dicarbonsäure, welche verschieden ist von einer Verbindung ausgewählt aus der Gruppe bestehend aus Terephthalsäure und Derivaten der Terephthalsäure (CS1), |
| cs3 | 15-35 | Mol.-% bezogen auf cs, | bevorzugt 25-35 Mol.-%, Baueinheiten abgeleitet von mindestens einer aliphatischen Dicarbonsäure |
| cs4 | 4-14 | Mol.-% bezogen auf cs, | Baueinheiten abgeleitet von mindestens einer Monocarbonsäure mit einem Molgewicht ≥100 g/mol, und |
| cs5 | 0-33 | Mol.-% bezogen auf cs, | Baueinheiten abgeleitet von weiteren Carbonsäuren, |
besteht, und wobei ak aus
| | | | |
|---|---|---|---|
| ak1 | 25-40 | Mol.-% bezogen auf ak, | bevorzugt 25-38 Mol.-% Baueinheiten abgeleitet von ein oder mehreren Diolen mit einem Molgewicht <100 g/mol, |
| ak2 | 60-75 | Mol.-% bezogen auf ak, | Baueinheiten abgeleitet von ein oder mehreren Diolen mit einem Molgewicht von 100-190 g/mol, bevorzugt sind >80 mol-% der OH-Funktionen primäre aliphatische OH-Funktionen, |
| ak3 | 0-3 | Mol.-% bezogen auf ak, | Baueinheiten abgeleitet von ein oder mehreren Diolen mit einem Molgewicht >190 g/mol, bevorzugt 191 - 800 g/mol, |
| ak4 | 0-3 | Mol.-% bezogen auf ak, | Baueinheiten abgeleitet von ein oder mehreren Polyolen mit einer Funktionalität ≥3 und mit einem Molgewicht 90-190 g/mol, nicht umfassend Polyether, |
| ak5 | 0-15 | Mol.-% bezogen auf ak, | Baueinheiten abgeleitet von ein oder mehreren Monoolen, z. B. nichtionische Tensiden, |
besteht.

2. Polyesterpolyol PAT-PES nach Anspruch 1, **dadurch gekennzeichnet, dass** das Polyesterpolyol eine Hydroxylzahl von 150 bis 350 mg KOH/g aufweist, bevorzugt von 160 bis 260 mg KOH/g, besonders bevorzugt von 165 bis 260 mg KOH/g und eine Säurezahl von 0,5-5 mg KOH/g, insbesondere bevorzugt 1,5 - 2,5 mg KOH/g, aufweist.

3. Polyesterpolyol PAT-PES nach Anspruch 1 oder 2, **dadurch gekennzeichnet, dass** das Polyesterpolyol eine dynamische Viskosität von 1 - 7 Pa*s bei 25°C, insbesondere bevorzugt von 1 - 5 Pa*s bei 25°C aufweist [DIN 53019-1 (September 2008)].

4. Verfahren zur Herstellung eines Polyesterpolyols PAT-PES gemäß einem der Ansprüche 1 - 3, bei dem ein Gemisch CS aus Carboxy-funktionellen Verbindungen umfassend:
| | |
|---|---|
| CS1 | eine Verbindung ausgewählt aus der Gruppe bestehend aus Terephthalsäure und Derivaten der Terephthalsäure, |
| CS2 | mindestens eine von CS1 verschiedene Verbindung ausgewählt aus der Gruppe bestehend aus aromatischen Dicarbonsäuren und deren Derivate, insbesondere ein niedermolekulares Derivat, ganz besonders bevorzugt Phthalsäureanhydrid |
| CS3 | mindestens eine Verbindung ausgewählt aus der Gruppe bestehend aus aliphatischen Dicarbonsäuren und deren Derivaten, |
| CS4 | mindestens eine Verbindung ausgewählt aus der Gruppe bestehend aus Monocarbonsäuren mit einem Molgewicht ≥100 g/mol und deren Derivaten, |
| CS5 | optional weitere Carbonsäuren und / oder deren Derivate, |
umgesetzt wird mit einem Gemisch AK aus alkoholischen Verbindungen umfassend:
| | |
|---|---|
| AK1 | mindestens eine Verbindung ausgewählt aus der Gruppe bestehend aus Diolen mit einem Molgewicht <100 g/mol und deren Derivate, |
| AK2 | mindestens eine Verbindung ausgewählt aus der Gruppe bestehend aus Diolen mit einem Molgewicht von 100-190 g/mol, bevorzugt mit >80 mol-% der OH-Funktionen primäre aliphatische OH-Funktionen, und deren Derivate, |
| AK3 | optional eine oder mehrere Verbindungen ausgewählt aus der Gruppe bestehend aus Diolen mit einem Molgewicht von mit einem Molgewicht >190 g/mol, bevorzugt 191 - 800 g/mol, oder deren Derivate, |
| AK4 | optional eine oder mehrere Verbindungen ausgewählt aus der Gruppe bestehend aus bestehend aus Polyhydroxylverbindungen mit einer Funktionalität ≥3 und mit einem Molgewicht 90-190 g/mol (keine Polyether) und deren Derivaten |
| AK5 | optional ein oder mehrere Monoole, z. B. nichtionische Tenside, und / oder Derivate dieser Alkohole. |

5. Verfahren gemäß Anspruch 4, **dadurch gekennzeichnet, dass** die Komponenten CS1 und AK1 Polyalkylenterephthalat, insbesondere Polyethylenterephthalat umfassen.

6. Verfahren gemäß Anspruch 4 oder 5, **dadurch gekennzeichnet, dass** die Komponente CS2 Phthalsäureanhydrid enthält.

7. Verfahren gemäß Anspruch 4, 5 oder 6, **dadurch gekennzeichnet, dass** die Komponente CS3 ausgewählt ist aus der Gruppe bestehend aus aliphatischen Dicarbonsäuren mit einer Säurezahl von >300 mg KOH/g bzw. deren Derivate, insbesondere bevorzugt Bernsteinsäure, Glutarsäure und Adipinsäure, Derivate dieser Säuren, sowie Mischungen der vorgenannten Verbindungen.

8. Verfahren gemäß einem der Ansprüche 4 - 7, **dadurch gekennzeichnet, dass** die Komponente AK2 > 80 mol% Diethylenglykol enthält.

9. Verfahren gemäß einem der Ansprüche 4 - 8, **dadurch gekennzeichnet, dass** das Verfahren als einstufige Veresterungsreaktion oder Umesterungsreaktion durchgeführt wird.

10. Verfahren gemäß einem der Ansprüche 4 - 8, **dadurch gekennzeichnet, dass** das Verfahren als zweistufige Veresterungsreaktion oder Umesterungsreaktion durchgeführt wird.

11. Isocyanat-reaktive Zusammensetzung B) für die Herstellung von PUR-/PIR-Hartschaumstoffen enthaltend ein Polyesterpolyol PAT-PES nach einem der Ansprüche 1 bis 3.

12. Isocyanat-reaktive Zusammensetzung B) gemäß Anspruch 11, **dadurch gekennzeichnet, dass** sie
50 bis 95 Gew.-% mindestens einer Verbindung B1) ausgewählt aus der Gruppe enthaltend Polyesterpolyolen und Polyetheresterpolyolen mit einer Hydroxylzahl im Bereich von 80 mg KOH/g bis 290 mg KOH/g, umfassend ein oder mehrere Polyole PAT-PES,
und
5,0 - 15,0 Gew.-% wenigstens eines Poylols B2) mit einer Hydroxylzahl im Bereich von 150 - 300 mg KOH/g, hergestellt durch Alkoxylierung von Propylenglykol oder Ethylenglykol mit Ethylenoxid (EO) und oder Propylenoxid (PO),
wobei die Angaben in Gew.-% jeweils auf alle Komponenten der isocyanatreaktiven Zusammensetzung B) bezogen sind,
enthält.

13. Isocyanat-reaktive Zusammensetzung B) gemäß Anspruch 11, **dadurch gekennzeichnet, dass** sie
50-80 Gew.-% mindestens einer Verbindung B1) ausgewählt aus der Gruppe enthaltend Polyesterpolyole und Polyetheresterpolyole mit einer Hydroxylzahl von 100 bis 300 mg KOH/g und einer mittleren Funktionalität von 1,5 bis 2,5, umfassend ein oder mehrere Polyole PAT-PES, und
0-5 Gew.-% eines aromatischen und/oder aromatisch/aliphatischen Polyesterpolyols B2) mit einer Hydroxylzahl von 320 bis 450 mg KOH/g und einer mittleren Funktionalität von 3 bis 4,5, und
5,5-15 Gew.-% eines Polyetherpolyols B3) mit einer OH-Zahl von 10 bis 80 KOH/g und mit mittleren Funktionalitäten von ≥1,2 bis ≤ 3,5, insbesondere einer mittleren Funktionalität von ≥ 1,8 bis ≤ 3,0, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO, und
0 - 7,5 Gew.-% (insbesondere bevorzugt 0 - 5 Gew.-%) eines Polyetherpolyols B4) mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid, und
0 - 3,0 Gew.-% (insbesondere bevorzugt 0 - 2,5 Gew.-%) eines Polyesterpolyols B5) mit einer OH-Zahl im Bereich von 600 - 900 mg KOH/g, insbesondere von 750 - 850 mg KOH/g, und
0 - 5 Gew.-% (insbesondere bevorzugt 0 - 3 Gew.-%) niedermolekulare isocyanat - reaktive Verbindungen,
0 - 1,5 Gew.-% Wasser B5) und
0 - 7,5 Gew.-% (insbesondere bevorzugt 0 - 5 Gew.-%) Rizinusöl B6),
wobei die Angaben in Gew.-% jeweils auf alle Komponenten der isocyanat-reaktiven Zusammensetzung B) bezogen sind,
enthält.

14. PUR-/PIR-Hartschaumstoff, erhältlich durch Vermischen und Umsetzen eines Reaktionsgemisches umfassend isocyanat-reaktive Zusammensetzung gemäß einem der Ansprüche 11,12 oder 13 mit
A) einer Polyisocyanatkomponente, bevorzugt einem Gemisch von Diphenylmethan-4,4'-diisocyanat mit Isomeren und höherfunktionellen Homologen,
wobei die Angaben in Gew.-% jeweils auf alle Komponenten der isocyanatreaktiven Zusammensetzung B) bezogen sind,
in Gegenwart von gegebenenfalls Hilfs- und Zusatzstoffen C)
und einem Treibmittel und gegenenfalls Co-Treibmittel D),
wobei der Isocyanat-Index ≥ 140 bis ≤ 450 beträgt.

15. PUR-PIR-Hartschaumstoff nach Anspruch 14, **dadurch gekennzeichnet, dass** der Hartschaumstoff in Form einer Dämmplatte oder als Verbundelement mit flexiblen oder nicht-flexiblen Deckschichten vorliegt und eine Dichte von 25 bis 65 kg/ m³ aufweist, insbesondere 30 bis 45 kg/m³oder dass der Hartschaumstoff als Blockschaum vorliegt und eine Dichte von 25 bis 300 kg/m³ aufweist, insbesondere 30 bis 80 kg/m³.

## Claims

1. Polyester polyols PAT-PES having a dynamic viscosity of ≤ 8 Pa*s at 25°C which are constructed from units cs derived from acid components and units ak derived from alcoholic components,
wherein cs is composed of
| | | | |
|---|---|---|---|
| cs1 | 40-60 | mol%, based on cs, | preferably 45-55 mol%, of units derived from terephthalic acid, |
| cs2 | 8-28 | mol%, based on cs, | preferably 10-20 mol%, of units derived from at least one further aromatic dicarboxylic acid distinct from a compound selected from the group consisting of terephthalic acid and derivatives of terephthalic acid (CS1), |
| cs3 | 15-35 | mol%, based on cs, | preferably 25-35 mol%, of units derived from at least one aliphatic dicarboxylic acid, |
| cs4 | 4-14 | mol%, based on cs, | of units derived from at least one monocarboxylic acid having a molar weight >100 g/mol and |
| cs5 | 0-33 | mol%, based on cs, | of units derived from further carboxylic acids |
and wherein ak is composed of
| | | | |
|---|---|---|---|
| ak1 | 25-40 | mol%, based on ak, | preferably 25-38 mol%, of units derived from one or more diols having a molar weight <100 g/mol, |
| ak2 | 60-75 | mol%, based on ak, | of units derived from one or more diols having a molar weight of 100-190 g/mol, where preferably >80 mol% of the OH functions are primary aliphatic OH functions, |
| ak3 | 0-3 | mol%, based on ak, | of units derived from one or more diols having a molar weight >190 g/mol, preferably 191-800 g/mol, |
| ak4 | 0-3 | mol%, based on ak, | of units derived from one or more polyols having a functionality ≥3 and having a molar weight of 90-190 g/mol, not comprising polyether, |
| ak5 | 0-15 | mol%, based on ak, | of units derived from one or more monools, for example nonionic surfactants. |

2. Polyester polyol PAT-PES according to Claim 1, **characterized in that** the polyester polyol has a hydroxyl number of 150 to 350 mg KOH/g, preferably of 160 to 260 mg KOH/g, particularly preferably of 165 to 260 mg KOH/g, and an acid number of 0.5-5 mg KOH/g, especially preferably 1.5-2.5 mg KOH/g.

3. Polyester polyol PAT-PES according to Claim 1 or 2, **characterized in that** the polyester polyol has a dynamic viscosity of 1-7 Pa*s at 25°C, especially preferably of 1-5 Pa*s, at 25°C [DIN 53019-1 (September 2008)].

4. Process for producing a polyester polyol PAT-PES according to any of Claims 1-3, wherein a mixture CS of carboxyl-functional compounds comprising:
| | |
|---|---|
| CS1 | a compound selected from the group consisting of terephthalic acid and derivatives of terephthalic acid, |
| CS2 | at least one compound distinct from CS1 selected from the group consisting of aromatic dicarboxylic acids and derivatives thereof, in particular a low molecular weight derivative, very particularly preferably phthalic anhydride, |
| CS3 | at least one compound selected from the group consisting of aliphatic dicarboxylic acids and derivatives thereof, |
| CS4 | at least one compound selected from the group consisting of monocarboxylic acids having a molar weight ≥100 g/mol and derivatives thereof, |
| CS5 | optionally further carboxylic acids and/or derivatives thereof, |
is reacted with a mixture AK of alcoholic compounds comprising:
| | |
|---|---|
| AK1 | at least one compound selected from the group consisting of diols having a molar weight <100 g/mol and derivatives thereof, |
| AK2 | at least one compound selected from the group consisting of diols having a molar weight of 100-190 g/mol, preferably where >80 mol% of the OH functions are primary aliphatic OH functions, and derivatives thereof, |
| AK3 | optionally one or more compounds selected from the group consisting of diols having a molar weight of >190 g/mol, preferably 191-800 g/mol, or derivatives thereof, |
| AK4 | optionally one or more compounds selected from the group consisting of polyhydroxyl compounds having a functionality ≥3 and having a molar weight of 90-190 g/mol(no polyethers) and derivatives thereof, |
| AK5 | optionally one or more monools, for example nonionic surfactants, and/or derivatives of these alcohols. |

5. Process according to Claim 4, **characterized in that** the components CS1 and AK1 comprise polyalkylene terephthalate, in particular polyethylene terephthalate.

6. Process according to Claim 4 or 5, **characterized in that** the component CS2 contains phthalic anhydride.

7. Process according to Claim 4, 5 or 6, **characterized in that** the component CS3 is selected from the group consisting of aliphatic dicarboxylic acids having an acid number of >300 mg KOH/g or derivatives thereof, especially preferably succinic acid, glutaric acid and adipic acid, derivatives of these acids and mixtures of the aforementioned compounds.

8. Process according to any of Claims 4-7, **characterized in that** the component AK2 contains > 80 mol% of diethylene glycol.

9. Process according to any of Claims 4-8, **characterized in that** the process is performed as a single-stage esterification reaction or transesterification reaction.

10. Process according to any of Claims 4-8, **characterized in that** the process is performed as a two-stage esterification reaction or transesterification reaction.

11. Isocyanate-reactive composition B) for production of rigid PUR/PIR foams containing a polyester polyol PAT-PES according to any of Claims 1 to 3.

12. Isocyanate-reactive composition B) according to Claim 11, **characterized in that** it contains
50% to 95% by weight of at least one compound B1) selected from the group containing polyester polyols and polyetherester polyols having a hydroxyl number in the range from 80 mg KOH/g to 290 mg KOH/g comprising one or more polyols PAT-PES
and
5.0%-15.0% by weight of at least one polyol B2) having a hydroxyl number in the range from 150-300 mg KOH/g, produced by alkoxylation of propylene glycol or ethylene glycol with ethylene oxide (EO) and/or propylene oxide (PO),
wherein the reported amounts in % by weight are in each case based on all components of the isocyanate-reactive composition B).

13. Isocyanate-reactive composition B) according to Claim 11, **characterized in that** it contains
50-80% by weight of at least one compound B1) selected from the group containing polyester polyols and polyetherester polyols having a hydroxyl number from 100 to 300 mg KOH/g and an average functionality of 1.5 to 2.5 comprising one or more polyols PAT-PES and
0-5% by weight of an aromatic and/or aromatic/aliphatic polyester polyol B2) having a hydroxyl number of 320 to 450 mg KOH/g and an average functionality of 3 to 4.5 and
5.5-15% by weight of a polyether polyol B3) having an OH number of 10 to 80 KOH/g and having average functionalities of ≥1.2 to ≤3.5, in particular an average functionality of ≥1.8 to ≤3.0, produced by alkoxylation of a suitable starter component with a mixture of ethylene oxide (EO) and propylene oxide (PO) having an EO content of 15-70% by weight based on the total amount of EO and PO and
0-7.5% by weight (especially preferably 0-5% by weight) of a polyether polyol B4) having an OH number in the range from 350-500 mg KOH/g, especially from 390-440 mg KOH/g, produced by alkoxylation of an aromatic amine with at least one alkylene oxide and
0-3.0% by weight (especially preferably 0-2.5% by weight) of a polyester polyol B5) having an OH number in the range from 600-900 mg KOH/g, especially from 750-850 mg KOH/g, and
0-5% by weight (especially preferably 0-3% by weight) of low molecular weight isocyanate-reactive compounds,
0-1.5% by weight of water B5) and
0-7.5% by weight (especially preferably 0-5% by weight) of castor oil B6),
wherein the reported amounts in % by weight are in each case based on all components of the isocyanate-reactive composition B).

14. Rigid PUR/PIR foam obtainable by mixing and reacting a reaction mixture comprising isocyanate-reactive composition according to any of claims 11, 12 or 13 with A) a polyisocyanate component, preferably a mixture of diphenylmethane 4,4'-diisocyanate with isomers and higher-functional homologues,
wherein the reported amounts in % by weight are in each case based on all components of the isocyanate-reactive composition B),
in the presence of optionally auxiliary and additive substances C)
and a blowing agent and optionally co-blowing agent D), wherein the isocyanate index is ≥ 140 to ≤ 450.

15. Rigid PUR/PIR foam according to Claim 14, **characterized in that** the rigid foam is in the form of an insulation sheet or in the form of a composite element having flexible or inflexible outer layers and has a density of 25 to 65 kg/m³, in particular 30 to 45 kg/m³, or **in that** the rigid foam is in the form of a block foam and has a density of 25 to 300 kg/m³, in particular 30 to 80 kg/m³.

## Revendications

1. Polyesterpoyols PAT-PES ayant une viscosité dynamique de ≤ 8 Pa*s à 25 °C, qui sont constitués d'unités constitutives es qui sont dérivées de composants acides, et d'unités constitutives ak qui sont dérivées de composants alcooliques,
es consistant en
| | | | |
|---|---|---|---|
| cs1 | 40-60 | % en moles, par rapport à es, | de préférence 45-55 % en moles, d'unités constitutives dérivées d'acide téréphtalique, |
| cs2 | 8-28 | % en moles, par rapport à es, | de préférence 10-20 % en moles, d'unités constitutives dérivées d'au moins un autre acide dicarboxylique aromatique qui est différent d'un composé choisi dans le groupe constitué par l'acide téréphtalique et les dérivés de l'acide téréphtalique (CS1), |
| cs3 | 15-35 | % en moles, par rapport à es, | de préférence 25-35 % en moles, d'unités constitutives dérivées d'au moins un acide dicarboxylique aliphatique |
| cs4 | 4-14 | % en moles, par rapport à es, | d'unités constitutives dérivées d'au moins un acide monocarboxylique ayant une masse molaire ≥ 100 g/mole, et |
| cs5 | 0-33 | % en moles, par rapport à es, | d'unités constitutives dérivées d'autres acides carboxyliques, |
et ak consistant en
| | | | |
|---|---|---|---|
| ak1 | 25-40 | % en moles, par rapport à ak, | de préférence 25-38 % en moles d'unités constitutives dérivées d'un ou de plusieurs diols ayant une masse molaire < 100 g/mole, |
| ak2 | 60-75 | % en moles, par rapport à ak, | d'unités constitutives dérivées d'un ou de plusieurs diols ayant une masse molaire de 100-190 g/mole, de préférence > 80 % en moles des fonctions OH étant des fonctions OH aliphatiques primaires, |
| ak3 | 0-3 | % en moles, par rapport à ak, | d ' unités constitutives dérivées d'un ou de plusieurs diols ayant une masse molaire > 190 g/mole, de préférence 191 - 800 g/mole, |
| ak4 | 0-3 | % en moles, par rapport à ak, | d ' unités constitutives dérivées d'un ou de plusieurs diols ayant une fonctionnalité ≥ 3 et ayant une masse molaire de 80 - 190 g/mole, ne |
| | | | comprenant pas de polyéthers, |
| ak5 | 0-15 | % en moles, par rapport à ak, | d'unités constitutives dérivées d'un ou de plusieurs mono-ols, par exemple de tensioactifs non ioniques. |

2. Polyesterpolyol PAT-PES selon la revendication 1, **caractérisé en ce que** le polyesterpolyol présente un indice d'hydroxyle de 150 à 350 mg de KOH/g, de préférence de 160 à 260 mg de KOH/g, de façon particulièrement préférée de 165 à 260 mg de KOH/g et un indice d'acide de 0,5 - 5 mg de KOH/g, de façon particulièrement préférée 1,5 -2,5 mg de KOH/g.

3. Polyesterpolyol PAT-PES selon la revendication 1 ou 2, **caractérisé en ce que** le polyesterpolyol présente une viscosité dynamique de 1 - 7 Pa*s à 25 °C, de façon particulièrement préférée de 1 - 5 Pa*s à 25 °C [DIN 53019-1 (septembre 2008)].

4. Procédé pour la préparation d'un polyesterpolyol PAT-PES selon l'une quelconque des revendications 1 - 3, dans lequel un mélange CS de composés à fonction carboxy comprenant :
CS1 un composé choisi dans le groupe constitué par l'acide téréphtalique et les dérivés de l'acide téréphtalique,
CS2 au moins un composé différent de CS1, choisi dans le groupe constitué par les acides dicarboxyliques aromatiques et leurs dérivés, en particulier un dérivé de faible masse moléculaire, de façon tout particulièrement préférée l'anhydride phtalique
CS3 au moins un composé choisi dans le groupe constitué par les acides dicarboxyliques aliphatiques et leurs dérivés,
CS4 au moins un composé choisi dans le groupe constitué par les acides monocarboxyliques ayant une masse molaire ≥ 100 g/mole et leurs dérivés,
CS5 en option d'autres acides carboxyliques et/ou leurs dérivés,
est mis à réagir avec un mélange AK de composés alcooliques comprenant :
AK1 au moins un composé choisi dans le groupe constitué par les diols ayant une masse molaire < 100 g/mole et leurs dérivés,
AK2 au moins un composé choisi dans le groupe constitué par les diols ayant une masse molaire de 100-190 g/mole, de préférence où > 80 % en moles des fonctions OH sont des fonctions OH aliphatiques primaires, et leurs dérivés,
AK3 en option un ou plusieurs composés choisis dans le groupe constitué par les diols ayant une masse molaire > 190 g/mole, de préférence 191 - 800 g/mole, ou leurs dérivés,
AK4 en option un ou plusieurs composés choisis dans le groupe constitué par les composés polyhydroxylés ayant une fonctionnalité ≥ 3 et ayant une masse molaire de 90-190 g/mole (hormis les polyéthers) ou leurs dérivés AK5 en option un ou plusieurs mono-ols, par exemple des tensioactifs non ioniques et/ou les dérivés de ces alcools.

5. Procédé selon la revendication 4, **caractérisé en ce que** les composants CS1 et AK1 comprennent un poly(alkylène téréphtalate) en particulier le poly(éthylène téréphtalate).

6. Procédé selon la revendication 4 ou 5, **caractérisé en ce que** le composant CS2 contient de l'anhydride phtalique.

7. Procédé selon la revendication 4, 5 ou 6, **caractérisé en ce que** le composant CS3 est choisi dans le groupe constitué par les acides dicarboxyliques aliphatiques ayant un indice d'acide de > 300 mg de KOH/g ou leurs dérivés, de façon particulièrement préférée l'acide succinique, l'acide glutarique et l'acide adipique, des dérivés de ces acides, ainsi que des mélanges des composés précités.

8. Procédé selon l'une quelconque des revendications 4 - 7, **caractérisé en ce que** le composant AK2 contient > 80 % en moles de diéthylèneglycol.

9. Procédé selon l'une quelconque des revendications 4 - 8, **caractérisé en ce que** le procédé est effectué en tant que réaction d'estérification ou réaction de transestérification en un stade.

10. Procédé selon l'une quelconque des revendications 4 - 8, **caractérisé en ce que** le procédé est effectuée en tant que réaction d'estérification ou réaction de transestérification en deux stades.

11. Composition B) réactive avec les isocyanates pour la préparation de mousses rigides en PUR/PIR contenant un poyesterpolyol PAT-PES selon l'une quelconque des revendications 1 à 3.

12. Composition B) réactive avec les isocyanates selon la revendication 11, **caractérisée en ce qu'**elle contient 50 à 95 % en poids d'au moins un composé B1) choisi dans le groupe contenant les poyesterpolyols et polyétheresterpolyols ayant un indice d'hydroxyle dans la plage de 80 mg de KOH/g à 290 mg de KOH/g, comprenant un ou plusieurs polyols PAT-PES,
et
5,0 - 15,0 % en poids d'au moins un polyol B2) ayant un indice d'hydroxyle dans la plage de 150 - 300 mg de KOH/g, préparé par alcoxylation de propylèneglycol ou d'éthylèneglycol avec de l'oxyde d'éthylène (EO) et/ou de l'oxyde de propylène (PO),
les indications en % en poids se rapportant chaque fois à tous les composants de la composition B) réactive avec les isocyanates.

13. Composition B) réactive avec les isocyanates selon la revendication 11, **caractérisée en ce qu'**elle contient 50 - 80 % en poids d'au moins un composé B1) choisi dans le groupe contenant les poyesterpolyols et polyétheresterpolyols ayant un indice d'hydroxyle de 100 à 300 mg de KOH/g et une fonctionnalité moyenne de 1,5 à 2,5, comprenant un ou plusieurs polyols PAT-PES, et
0 - 5 % en poids d'un polyesterpolyol aromatique et/ou aromatique/aliphatique B2) ayant un indice d'hydroxyle de 320 à 450 mg de KOH/g et une fonctionnalité moyenne de 3 à 4,5, et
5,5 - 15 % en poids d'un polyétherpolyol B3) ayant un indice d'OH de 10 à 80 de KOH/g et ayant des fonctionnalités moyennes de ≥ 1,2 à ≤ 3,5, en particulier une fonctionnalité moyenne de ≥ 1,8 à ≤ 3,0, préparé par alcoxylation d'un composant de départ approprié avec un mélange d'oxyde d'éthylène (EO) et d'oxyde de propylène (PO) ayant une teneur en EO de 15-70 % en poids par rapport à la quantité totale d'EO et PO, et
0 - 7,5 % en poids (de façon particulièrement préférée 0 - 5 % en poids) d'un polyétherpolyol B4) ayant un indice d'OH dans la plage de 350 - 500 mg de KOH/g, en particulier de 390 - 440 mg de KOH/g, préparé par alcoxylation d'une amine aromatique avec au moins un oxyde d'alkylène, et
0 - 3,0 % en poids (de façon particulièrement préférée
0 - 2,5 % en poids) d'un polyesterpolyol B5) ayant un indice d'OH dans la plage de 600 - 900 mg de KOH/g, en particulier de 750 - 850 mg de KOH/g et
0 - 5 % en poids (de façon particulièrement préférée
0 - 3 % en poids) de composés de faible masse moléculaire, réactifs avec les isocyanates,
0 - 1,5 % en poids d'eau B5) et
0 - 7,5 % en poids (de façon particulièrement préférée
0 - 5 % en poids) d'huile de ricin B6),
les indications en % en poids se rapportant chaque fois à tous les composants de la composition B) réactive avec les isocyanates.

14. Mousse rigide de PUR/PIR, pouvant être obtenue par mélange et mise en réaction d'un mélange réactionnel comprenant la composition réactive avec les isocyanates selon l'une quelconque des revendications 11, 12 ou 13 avec
A) un composant polyisocyanate, de préférence un mélange de 4,4'-diisocyanate de diphénylméthane avec des isomères et homologues à plus haute fonctionnalité,
les indications en % en poids se rapportant chaque fois à tous les composants de la composition B) réactive avec les isocyanates
en présence d'éventuellement adjuvants et additifs C)
et d'un agent porogène et éventuellement co-agent porogène D),
l'indice d'isocyanate valant ≥ 140 à ≤ 450.

15. Mousse rigide de PUR/PIR selon la revendication 14, **caractérisée en ce que** la mousse rigide se trouve sous forme d'une plaque isolante ou sous forme d'élément composite comportant des couches de recouvrement flexibles ou non flexibles et présente une densité de 25 à 65 kg/m³, en particulier 30 à 45 kg/m³ ou **en ce que** la mousse rigide se trouve sous forme de mousse en bloc et présente une densité de 25 à 300 kg/m³, en particulier 30 à 80 kg/m³.
